# EUROPÄISCHE PATENTANMELDUNG

(11) **EP 2 298 484 A2**
(43) Veröffentlichungstag der Anmeldung: **23.03.2011**
(21) Anmeldenummer: 10009214.7
(22) Anmeldetag: 06.09.2010
(51) Int. Cl.: B23K 9/12

(54) **Drahtzuführstift**

(30) Priorität: 11.09.2009 DE 102009040906
(71) Anmelder: TBI Industries GmbH, 35643 Fernwald/Steinbach (DE)
(72) Erfinder: Binzel, Oliver, 4132 Muttenz (CH)

(57) **Zusammenfassung**

Die Erfindung betrifft einen Drahtzuführstift mit einem Griffstück (1) und einem Leitrohr (2) mit einer düsenförmigen Austrittsöffnung (3) für den geförderten Draht (4), wobei der Drahtzuführstift über einen flexiblen Führungsschlauch (7) an ein motorisch betriebenes Drahtvorschubgerät angeschlossen wird. Zur Steuerung des Drahtvorschubgerätes ist der Drahtzuführstift (1) mit einer Bedieneinheit (5) mit einem oder mehreren Bedienelementen ausgestattet.

## Beschreibung

Die Erfindung betrifft einen Drahtzuführstift zum Anschluss an motorisch betriebene Drahtfördergeräte. Dieses Hilfsmittel ermöglicht das kontinuierliche Zuführen von Schweißzusatzwerkstoff in Form eines Drahtes in das Schweißbad bei Schweiß- oder Lötprozessen.

Üblicherweise wird Schweißzusatzwerkstoff bei den manuellen Schweißprozessen als Stab zugegeben, welcher eine Länge von ca. 40 cm hat. Da der Draht am vorderen Ende gezielt abgeschmolzen wird, muss der Schweißer beim Zuführen des Drahtes durch geschickte Fingertechnik den Draht möglichst gleichmäßig durch die Hand nach vorne bewegen. Das Halten am hinteren Ende bei einem neuen, noch langen Stab würde durch natürliche Unruhe der haltenden Hand große Bewegungen am freien Ende bewirken, was ein optisch unschönes Nahtbild zur Folge hätte. Da die Stäbe eine gewisse Steifigkeit aufweisen müssen, sind Durchmesser unter 1.6 mm schlecht zu realisieren, bzw. schlecht zu handhaben. Durchmesser unter ca. 1.0 mm sind praktisch nicht möglich.

Bekannt sind Hilfsmittel zum Halten des Drahtstabes, die ein Fördern des Stabes durch Drehen an einem Vorschubrädchen ermöglichen, diese Halter können einhändig bedient werden. Dennoch muss der Stab regelmäßig gewechselt werden, was eine Unterbrechung des Schweißvorganges bedingt. Zudem kann das Endstücke des Stabes nicht verwendet werden, was sich bei hochwertigen Zusatzwerkstoffen negativ auf die Produktionskosten auswirkt.

Bekannt sind ebenfalls Drahtzuführeinrichtungen, die fest auf einem handgeführten Schweißbrenner montiert sind. Bei Verwendung dieser Drahtzuführungen kann die Schweißgeschwindigkeit im Vergleich zum rein manuellen Zuführen des Drahtes deutlich erhöht werden und die schwierige Arbeit des manuellen Drahtzuführens fällt weg. Nachteilig bei dieser Lösung ist, dass die Drahtzuführung relativ zum Brenner an einer festen Position angebracht ist, und während des Schweißens diese Position nicht verändert werden kann. Dies führt zu Einschränkungen bei der praktischen Anwendung der Einrichtung.

Die hier beschriebene Erfindung stellt sich zum Ziel, eine manuell zu haltende und sehr flexibel einsetzbare Zuführeinrichtung für den Draht zu schaffen, mit der ein kontinuierliches, gezieltes Zuführen eines maschinell ab Rolle geförderten Drahtes, sowie die Verarbeitung auch sehr dünner und biegeweicher Drähte, mit Durchmessern deutlich unter 0.5 mm noch möglich ist. Ebenfalls ist der Einsatz der Erfindung zur Zuführung von meist weicheren Lötdrähten vorgesehen.

Um die Leistung des Schweißvorganges weiter zu steigern, kann der zugeführte Draht mit einem Prozessstrom beaufschlagt werden, was durch die ohmsche Erwärmung zu einer Vorheizung des Drahtes und damit einer Erhöhung der Abschmelzleistung führt. Die Kombination einer Heißdrahtvorrichtung mit einer manuellen Drahtzuführungshilfe ist ein weiteres Ziel der Erfindung.

Eine Lösung des Problems erfolgt durch einen Drahtzuführstift mit den in Anspruch 1 aufgeführten Merkmalen. Die weiteren Unteransprüche beschreiben vorteilhafte Lösungen mit erweiterten Funktionen.

So umfasst der erfindungsgemäße Drahtzuführstift in seiner einfachsten Ausführung ein Griffstück mit daran angebrachtem Leitrohr für den Draht. Das Griffstück wird mit einem flexiblen Führungsschlauch mit dem Drahtvorschubgerät verbunden. Üblicherweise werden hierfür marktübliche Schnellkupplungen verwendet, wie z.B. der Euro-Zentralanschluss. Der Draht läuft dann vom Drahtvorschubgerät durch den Führungsschlauch zum Griffstück und weiter durch das Leitrohr, an dessen vorderem Ende er austritt. Die Steuerung des Drahtvorschubgerätes kann auf beliebige Weise geschehen, z.B. durch ein Fußpedal oder eine Fernbedienung. Vorteilhaft im Vergleich zu bekannten Drahtzuführeinrichtungen ist hier die Kombination der automatischen Drahtzuführung mit der flexiblen Positionierung des Drahtes von Hand, so dass auch an schwer zugänglichen Stellen mit hoher Produktivität und Ergonomie gearbeitet werden kann.

In einer besonders vorteilhaften Ausgestaltung der Erfindung wird auf dem Griffstück eine Bedieneinheit angeordnet, welche die Steuerung des Drahtvorschubgerätes mit der Hand erlaubt, welche den Drahtzuführstift hält. Die Anbindung der Bedieneinheit an das Vorschubsystem erfolgt z.B. über ein Verbindungskabel, welches im Schlauchpaket oder separat davon geführt wird, oder auch per Funksignalen. Die Bedieneinheit kann Bedienelemente zum Starten und Stoppen des Drahtvorschubgerätes, zum Umschalten der Förderrichtung, zum Verändern der Fördergeschwindigkeit oder auch zur Auswahl weiterer Funktionen beinhalten.

Weitere Ausgestaltungen der Erfindung erlauben zusätzliche Einsatzmöglichkeiten. So kann durch den Einsatz eines gebogenen oder verlängerten Leitrohres der geförderte Draht punktgenau auch an Schweißstellen zugeführt werden, die mit einem manuell zugeführten geraden Stab nicht erreicht werden können. Dies kommt üblicherweise vor bei komplexen Bauteilgeometrien und engen Platzverhältnissen, z.B. beim Rohrleitungsbau. Überdies treten bei langen und gebogenen Leitrohren hohe Reibungskräfte am Draht auf, welche bei den rein manuellen Zuführgeräten nicht mehr einfach durch Fingerkraft überwunden werden können. Derartige verlängerte oder stark gebogene Leitrohre sind also mit bekannten Zuführgeräten nicht einsetzbar. Die Kombination des erfindungsgemäßen Drahtzuführstiftes mit einem motorisch betriebenen Drahtvorschubgerät eröffnet ganz neue Anwendungsmöglichkeiten.

Durch die Auswechselbarkeit des Leitrohres oder der Drahtdüse kann der erfindungsgemäße Drahtzuführstift in kürzester Zeit an wechselnde Arbeitsaufgaben angepasst werden.

Neben dem Einsatz beim manuellen Schweißen ist auch die manuelle Drahtzugabe in das Schweißbad eines maschinell geführten Brenners möglich, ohne dass handhabungsbedingte Zwangspausen wie bei der manuellen Zuführung von einzelnen Stäben nötig sind.

Grundsätzlich ist durch den Einsatz der Erfindung eine deutliche Erhöhung der Arbeitsgeschwindigkeit und der Ergonomie gegenüber der rein manuellen Stabzuführung möglich.

Für den Einsatz bei Hochleistungsschweißungen kann das Leitrohr oder die Drahtdüse mit einer Kühleinrichtung ausgerüstet werden. Vorteilhaft kann hier eine Wasserkühlung sein. Dazu kann das Leitrohr oder die Drahtdüse mit einem Kühlmantel mit einer Zu- und Rückleitung für das Kühlwasser versehen werden.

In einer weiteren Ausführungsform der Erfindung wird der durch den Drahtzuführstift geleitete Draht mittels einer geeigneten Vorrichtung, z.B. einer elektrischen Widerstandsheizung, erwärmt. Die Widerstandsheizung kann dabei so aufgebaut sein, dass ein elektrischer Heizleiter um ein Übertragungsrohr angeordnet ist, und dieses erwärmt. Der Draht wird durch eine Bohrung im Übertragungsrohr geführt und nimmt dabei Wärme auf. Durch diesen Prozess kann die Oberflächenfeuchte des Drahtes reduziert werden, was bei Qualitätsschweißungen sehr wichtig sein kann. Bei höherer Vorwärmtemperatur kann auch die zum späteren Abschmelzen des Drahtes nötige Energie reduziert werden.

In einer alternativen Ausführungsform der Erfindung wird der Draht vor dem Austritt aus der Drahtdüse mit einem Prozessstrom beaufschlagt, wobei die Rückleitung dieses Stroms über den Lichtbogen und das Werkstück geschieht. Dazu sind entsprechende Kontaktstellen im Griffstück, Leitrohr oder der Drahtdüse vorgesehen, die mit einer separaten elektrischen Zuleitung für den Prozessstrom verbunden sind, so dass ein sogenannter Heißdraht-Schweißprozess durchgeführt werden kann. Die Kontaktstellen zum Draht können als Kupferelektroden ausgeführt werden, welche zum Griffstück des Drahtzuführstiftes elektrisch isoliert befestigt sind. Der Draht wird durch eine Bohrung in der Kupferelektrode geführt, wobei er die Elektrode kontaktiert. Die Elektrode sollte möglichst kurz vor der Drahtaustrittsöffnung des Drahtzuführstiftes angeordnet sein, eine Kombination der Elektrode mit der Drahtdüse bietet sich hier als vorteilhafte Lösung an. Die Kombination der manuellen Drahtzuführung mit der Möglichkeit, einen Heißdrahtprozess durchzuführen, bietet dem Anwender völlig neue Möglichkeiten der Prozessgestaltung. So kann bei reduziertem Schweißstrom die Abschmelzleistung des Drahtes erhöht werden.

In einer weiteren Ausgestaltung der Erfindung wird der aus der Austrittsöffnung austretende Draht durch ein in den Drahtzuführstift eingeleitetes Schutzgas vor dem Einfluss der Atmosphäre geschützt. Dazu wird mittels einer um den Draht angeordneten Düse mit dazu gehöriger Schutzgaszuleitung ein Schutzgasmantel um den Draht gebildet und der Kontakt mit Luftsauerstoff verhindert. Für einen noch weitergehenden Schutz des Drahtes kann auch der Drahtführungskanal auf seiner ganzen Länge mit Schutzgas geflutet werden.

Eine weitere Ausgestaltung der Erfindung besteht aus der Anordnung von Bedienelementen in der Bedieneinheit, welche zur Steuerung einer Schweißmaschine dienen.

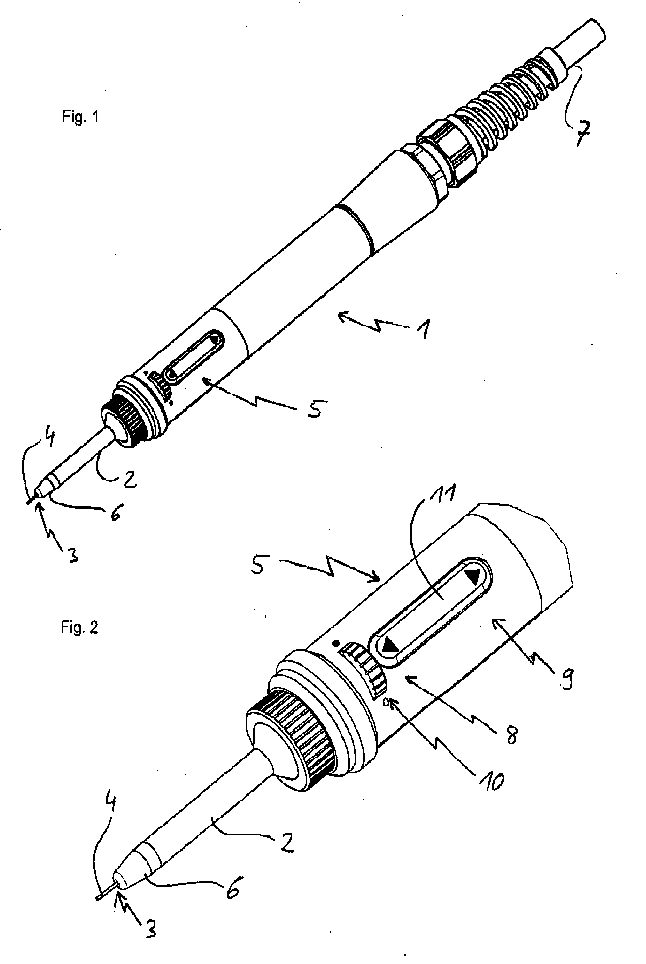

Ein Ausführungsbeispiel der Erfindung wird anhand der Figuren 1 und 2 erläutert. Es zeigen:
Fig. 1 den Drahtzuführstift mit Griffstück (1), Leitrohr (2), Drahtdüse (6), Bedieneinrichtung (5) mit Bedienelementen (8, 9, 10) und dem flexiblen Führungsschlauch (7).
Fig. 2 das Vorderteil des Drahtzuführstifts mit einer vorteilhaften Anordnung der Bedieneinrichtung (5), bei der die Taster für die Vor- und Rückbewegung des Drahtes in einer einfach zu bedienenden Schalterwippe (11) zusammengefasst sind, und ein zusätzliches Bedienelement (10) für die Drahtgeschwindigkeit oder auch andere Einstellmöglichkeiten der Schweißanlage in Form eines Drehpotentiometers integriert ist.

Wie Fig. 1 zu entnehmen ist, kann ein Drahtzuführstift aus einem Griffstück (1) aufgebaut werden, an dessen vorderem Ende sich ein Gewinde befindet, auf dem ein Leitrohr (2) für den Draht aufgeschraubt ist. Das Leitrohr (2) selber ist am vorderen Ende mit einer aufgeschraubten Drahtdüse (6) versehen, deren Innendurchmesser typischerweise ca. 2/10 mm größer ist, als der Durchmesser des geförderten Drahtes (4). Der Draht (4) wird somit präzise geführt, weist aber nicht zu viel Reibung in der Düse auf. Das Griffstück (1) ist im Inneren mit einer Durchgangsbohrung versehen, welche den Führungskanal für den Draht vom flexiblen Führungsschlauch (7) zum Leitrohr (2) darstellt. Am hinteren Ende des Griffstückes (1) ist der flexible Führungsschlauch (7) befestigt, der mittels eines nicht dargestellten Schlauchnippels am hinteren Ende des Griffstücks (1) befestigt wird. Im Anschlussbereich des flexiblen Führungsschlauchs (7) ist ein Knickschutz aus flexiblem Kunststoff vorgesehen, der ein zu starkes Abknicken des flexiblen Führungsschlauchs (7) verhindert. Das auf der Seite des Drahtvorschubgerätes gelegene Ende des flexiblen Führungsschlauchs ist hier nicht dargestellt, es kann mit einem der zahlreichen bekannten Anschlüsse für Drahtvorschubgeräte, z.B. dem Eurozentralanschluss, versehen werden.

Im Inneren des aus vorgehend beschriebenen Komponenten aufgebauten Drahtführungskanals wird eine Drahtführungsseele aus Kunststoff mit guten Gleiteigenschaften für den Draht (4) eingebaut, so dass der Draht (4) nicht direkt über die verschiedenen Komponenten flexibler Führungsschlauch (7), Schlauchnippel und Griffstück (1) gleitet. Durch das Auswechseln dieser Drahtführungsseele kann der Drahtzuführstift auf verschiedene zu fördernde Drahtdurchmesser und Drahtwerkstoffe umgerüstet werden. Die Drahtführungsseele reicht vom Vorschubgerät bis zum Beginn des Leitrohres (2), in diesem wird der Draht (4) direkt geführt.

Im Griffstück (1) ist weiter eine Bedieneinrichtung (5) angeordnet, welche das Fernsteuern des Vorschubgerätes ermöglicht. In der dargestellten Ausführungsvariante ist die Bedieneinrichtung (5) mit Bedienelementen (8, 9, 10) zum Aktivieren des Drahtvorschubs in Vorwärts- und Rückwärtsrichtung, sowie zum Verändern der Vorschubgeschwindigkeit ausgerüstet. Die Bedieneinrichtung (5) ist in einer Ausnehmen des Griffstücks (1) angeordnet, so dass der ebenfalls im Griffstück befindliche Drahtführungskanal nicht tangiert wird. Von der Bedieneinrichtung (5) geht eine Steuerleitung zur Übertragung der elektrischen Signale aus, welche durch eine Bohrung im Griffstück in Richtung Drahtvorschubgerät geführt wird. Die Steuerleitung kann sich mit dem flexiblen Führungsschlauch (7) in einem gemeinsamen Schutzschlauch befinden.

Die Bedienelemente (8, 9, 10) selber bestehen aus einer Schalterwippe (11), unter der im vorderen und hinteren Bereich je ein Mikroschalter angeordnet ist, und einem Potentiometer mit Rändelrad (10). Die entsprechenden Anschlüsse der Mikroschalter und des Potentiometers werden über die Steuerleitung zum Drahtvorschubgerät geführt, wo sie an elektrische Schnittstellen angeschlossen werden.

## Patentansprüche

1. Drahtzuführstift mit einem Griffstück (1) und einem Leitrohr (2) mit einer düsenförmigen Austrittsöffnung (3) für den geförderten Draht (4),
**dadurch gekennzeichnet,**
**dass** der Drahtzuführstift über einen flexiblen Führungsschlauch (7) an ein motorisch betriebenes Drahtvorschubgerät angeschlossen wird.

2. Drahtzuführstift nach Anspruch 1,
**dadurch gekennzeichnet,**
**dass** das Leitrohr (2) zur Anpassung an unterschiedliche Arbeitsaufgaben einfach gegen ein Leitrohr mit anderer Geometrie ausgewechselt werden kann.

3. Drahtzuführstift nach einem der vorhergehenden Ansprüche,
**dadurch gekennzeichnet,**
**dass** am vorderen Ende des Leitrohres (2) eine Drahtdüse (6) angeordnet ist, und diese zur Anpassung an unterschiedliche Arbeitsaufgaben einfach gegen eine Drahtdüse mit anderer Geometrie ausgewechselt werden kann.

4. Drähtzuführstift nach einem der vorhergehenden Ansprüche,
**dadurch gekennzeichnet,**
**dass** im Bereich des Griffstücks (1) eine Bedieneinrichtung (5) mit mindestens einem Bedienelement (8) zum Starten und Stoppen des Drahtvorschubs angeordnet ist.

5. Drahtzuführstift nach einem der vorhergehenden Ansprüche,
**dadurch gekennzeichnet,**
**dass** die Bedieneinrichtung (5) ein Bedienelement zur Umschaltung der Drahtförderrichtung enthält.

6. Drahtzuführstift nach einem der vorhergehenden Ansprüche,
**dadurch gekennzeichnet,**
**dass** die Bedieneinrichtung (5) ein Bedienelement (9) zum Starten und Stoppen des Drahtvorschubs in Rückwärtsrichtung enthält.

7. Drahtzuführstift nach Ansprüchen 4 und 6,
**dadurch gekennzeichnet,**
**dass** die beiden Bedienelemente (8, 9) zum Starten und Stoppen des Drahtvorschubs in beiden Richtungen in Form einer gemeinsamen Schalterwippe (11) mit einem vorderen und einem hinteren Schaltbereich ausgeführt sind.

8. Drahtzuführstift nach einem der vorhergehenden Ansprüche,
**dadurch gekennzeichnet,**
**dass** die Bedieneinrichtung (5) ein Bedienelement (10) zur Beeinflussung der Fördergeschwindigkeit enthält.

9. Drahtzuführstift nach einem der vorhergehenden Ansprüche,
**dadurch gekennzeichnet,**
**dass** das Leitrohr (2) oder die Drahtdüse (6) mit einer Kühleinrichtung versehen sind.

10. Drahtzuführstift nach einem der vorhergehenden Ansprüche,
**dadurch gekennzeichnet,**
**dass** im Griffstück (1), im Leitrohr (2) oder in der Drahtdüse (6) eine Einrichtung zum Vorwärmen des Drahtes (4) enthalten ist.

11. Drahtzuführstift nach einem der vorhergehenden Ansprüche,
**dadurch gekennzeichnet,**
**dass** das Griffstück (1), Leitrohr (2) oder die Drahtdüse (6) zur Beaufschlagung des Drahtes (4) mit einem Prozessstrom ausgelegt sind.

12. Drahtzuführstift nach einem der vorhergehenden Ansprüche,
**dadurch gekennzeichnet,**
**dass** eine Schutzgaszuleitung enthalten ist, und der Schutzgasstrom so geleitet wird, dass er den aus der Austrittsöffnung (3) austretenden Draht (4) umhüllt.

13. Drahtzuführstift nach einem der vorhergehenden Ansprüche,
**dadurch gekennzeichnet,**
**dass** mit der Bedieneinrichtung auch Prozessparameter einer Schweißanlage beeinflusst werden können.
